# EUROPEAN PATENT APPLICATION

(11) **EP 3 690 478 A1**
(43) Date of publication of application: **05.08.2020**
(21) Application number: 18862930.7
(22) Date of filing: 20.09.2018
(51) Int. Cl.: G01S 13/42, G01S 7/03, G01S 13/34

(54) **RADAR DEVICE**

(30) Priority: 29.09.2017 JP 2017191213
(71) Applicant: Mitsumi Electric Co., Ltd., Tama-Shi, Tokyo 206-8567 (JP)
(72) Inventor: KOJIMA, Akihiko, Tokyo 206-8567 (JP)
(74) Representative: Lambsdorff & Lange Patentanwälte Partnerschaft mbB
(86) International application number: PCT/JP2018/034787
(87) International publication number: WO 2019/065440

(57) **Abstract**

Provided is a radar device that can acquire three-dimensional information while mitigating an increase in the complexity and size of the device structure. A radar device 100 comprises: an antenna 110 having frequency characteristics in which the emission angle of the elevation angle direction changes according to the supplied frequency; a transmission signal formation unit (control/processing unit 101, oscillator 102, amplifier 103) that supplies a chirp signal to the antenna 110; and a reception processing unit (control/processing unit 101) that acquires a detection point for each frequency band using a reception signal for a transmission signal of each frequency band included in the chirp signal, and that acquires information regarding the height direction on the basis of the presence or absence of the detection points across a plurality of frequency bands.

## Description

### Technical Field

The present invention relates to a radar apparatus that is mounted on a vehicle, for example, and that is capable of detecting a peripheral object.

### Background Art

Conventionally, radar apparatuses are widely used to realize an adaptive cruise control system (ACC) and the like. Generally, a vehicle-mounted radar apparatus emits a millimeter radio wave to the front of a vehicle, receives a reflected radio wave from a target, mixes a reception signal generated from the received radio wave with a transmission signal, and thereby detects a relative distance, a relative velocity and the like with respect to the target.

A specific description will be given. As a vehicle-mounted radar apparatus, there is known a radar (a so-called millimeter wave radar) that uses millimeter waves having wavelengths of 1 to 10 mm (frequencies: 30 to 300 GHz). Since a millimeter wave radar uses radio waves, a certain level of sensitivity can advantageously be maintained even in bad weather such as rain or fog. The millimeter wave radar transmits a transmission signal (radio wave) to the surroundings of a vehicle, receives and analyzes a reflection signal (reflected wave) reflected by a detection target object (hereinafter referred to as "target object"), and thereby acquires information about a surrounding environment (such as the position (distance, azimuth), a relative velocity of the target object). Furthermore, in recent years, a high-resolution millimeter wave radar that uses millimeter waves in a 79 GHz band (77 to 81 GHz) so as to separately detect an artificial object, such as a vehicle, and a pedestrian (human) has been put to practical use.

A frequency modulated-continuous wave (FM-CW) method is widely used by millimeter wave radars of such a type. According to the FM-CW method, a continuous frequency-modulated wave is transmitted, and a reflection signal from the target object is received. Then, the relative velocity and the relative distance of the target object are detected on the basis of a frequency difference between transmission/reception signals. The FM-CW method is described in Patent Literatures (hereinafter, abbreviated as PTLs) 1 and 2, for example.

Furthermore, conventionally, a radar system that is capable of acquiring three-dimensional information (that is, information in a horizontal direction and a height direction) is also being proposed. Using the three-dimensional information enables even more accurate recognition of presence/absence of an obstacle around a vehicle, for example.

As radar technologies that enable acquisition of three-dimensional information, the followings are being proposed, for example.

(1) A method of physically disposing a plurality of radar apparatuses, and of acquiring three-dimensional information by switching between the radar apparatuses (see PTL 3).
(2) A method of physically changing the direction of an antenna (see PTL 4).
(3) A method of changing a radiation direction using a phased array (see PTL 5).
(4) A method of using digital beam forming (see PTL 6).

### Citation List

### Patent Literature

PTL 1
   Japanese Patent Application Laid-Open No. 2010-112879
PTL 2
   Japanese Patent Application Laid-Open No. 2000-206234
PTL 3
   Japanese Patent Application Laid-Open No. H5-107340
PTL 4
   Japanese Patent Application Laid-Open No. H11-14749
PTL 5
   Japanese Patent Application Laid-Open No. 2005-207837
PTL 6
   Japanese Patent Application Laid-Open No. H5-63427

### Summary of Invention

### Technical Problem

However, the radar technologies described above that enable acquisition of three-dimensional information are disadvantageous in that an apparatus configuration is made complex.

An object of the present invention is to provide a radar apparatus that is capable of acquiring three-dimensional information, without increasing complexity and size of an apparatus configuration.

### Solution to Problem

One aspect of a radar apparatus according to the present invention includes:
an antenna that has frequency characteristics leading to a change in a radiation angle in an elevation direction according to a frequency that is supplied;
a transmission signal forming section that supplies, to the antenna, transmission signals in a plurality of frequency bands; and
a reception processing section that obtains a detected point in each frequency band by using a reception signal corresponding to a transmission signal in each frequency band, and that obtains information in a height direction on a basis of whether the detected point is present or not over the plurality of frequency bands.

### Advantageous Effects of Invention

According to the present invention, a radar apparatus that is capable of acquiring three-dimensional information may be realized, without increasing complexity and size of an apparatus configuration.

### Brief Description of Drawings

FIG. 1 is a top view illustrating a radiation range of a general vehicle-mounted radar apparatus;
FIG. 2 is a side view illustrating the radiation range of the general vehicle-mounted radar apparatus;
FIG. 3 is a diagram illustrating how radiation is made in an elevation direction by a radar apparatus according to an embodiment;
FIG. 4 is a diagram illustrating a schematic configuration of the radar apparatus according to the embodiment;
FIG. 5 is a diagram illustrating frequency characteristics of an antenna in a horizontal direction;
FIG. 6 is a diagram illustrating frequency characteristics of the antenna in the elevation direction (height direction);
FIG. 7 is a diagram illustrating how a radiation angle of the antenna changes in the elevation direction, where a frequency of a signal that is supplied to the antenna is increased over time;
FIG. 8 is a diagram illustrating a transmission signal according to FM-CW method used in the embodiment;
FIG. 9 is a diagram illustrating frequency change of a single chirp signal;
FIG. 10 is a diagram illustrating how a received single chirp signal is sampled into N pieces of sampling data;
FIG. 11 is a flowchart illustrating data processing on a reception signal that is performed by a control/processing section;
FIG. 12 is a diagram for describing reception data that is used at the time of the data processing in FIG. 11;
FIG. 13 is a diagram for describing an in-chirp presence probability calculation process;
FIG. 14 is a diagram for describing an output data selection process;
FIG. 15 is a diagram illustrating an example of data that is obtained by a conventional radar apparatus;
FIG. 16 is a diagram illustrating an example of data that is obtained by the radar apparatus according to the embodiment;
FIG. 17 is a diagram illustrating detected points on a two-dimensional plane obtained in each divided block;
FIG. 18 is a diagram illustrating how filtering output looks like when each threshold is used;
FIG. 19 is a flowchart illustrating data processing on a reception signal according to another embodiment;
FIG. 20 is a diagram illustrating how radiation is made in the elevation direction according to another embodiment; and
FIG. 21 is a flowchart illustrating data processing on a reception signal according to another embodiment.

### Description of Embodiments

Embodiments of the present invention will be described in detail below with reference to the accompanying drawings.

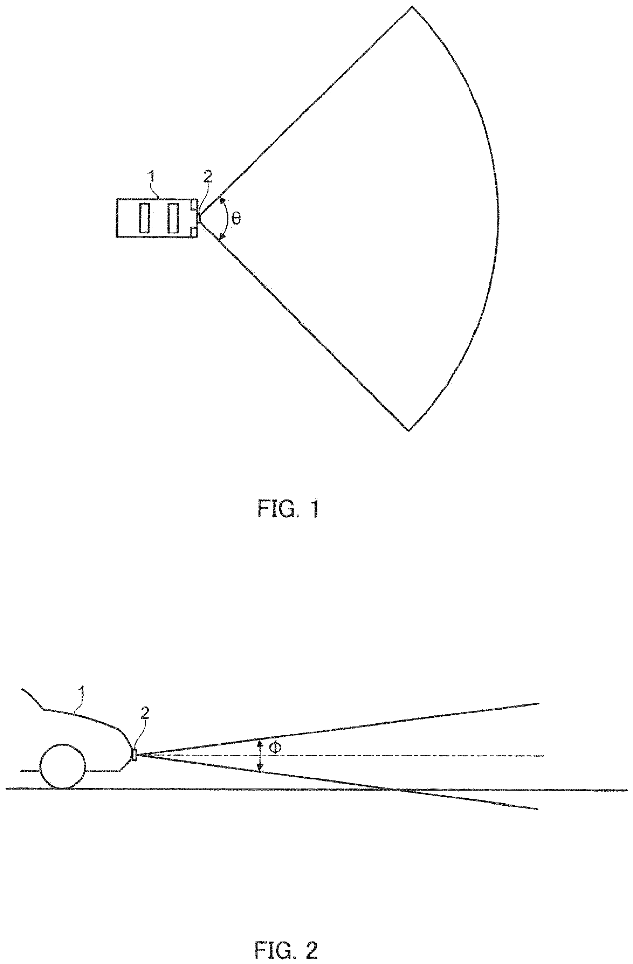

FIG. 1 is a top view illustrating a radiation range of a general vehicle-mounted radar apparatus. Radar apparatus 2 mounted on vehicle 1 radiates a radar wave that spreads over specific horizontal radiation angle θ in a horizontal direction. FIG. 2 is a side view illustrating the radiation range of the general vehicle-mounted radar apparatus. Radar apparatus 2 radiates a radar wave that spreads over specific elevation radiation angle ϕ in an elevation direction (or in other words, a height direction).

As described below, a radar apparatus according to a present embodiment uses an antenna, a radiation angle of which in an elevation direction is changed accordingly when a frequency supplied to the antenna is changed (in other words, an antenna having elevation characteristics with respect to the frequency), and the radar apparatus transmits a transmission signal according to FM-CW method from such an antenna, uses a change in the radiation angle in the elevation direction caused by a change in the frequency, and thereby acquires information in a height direction. This allows radar information in the height direction to be acquired with a simple configuration.

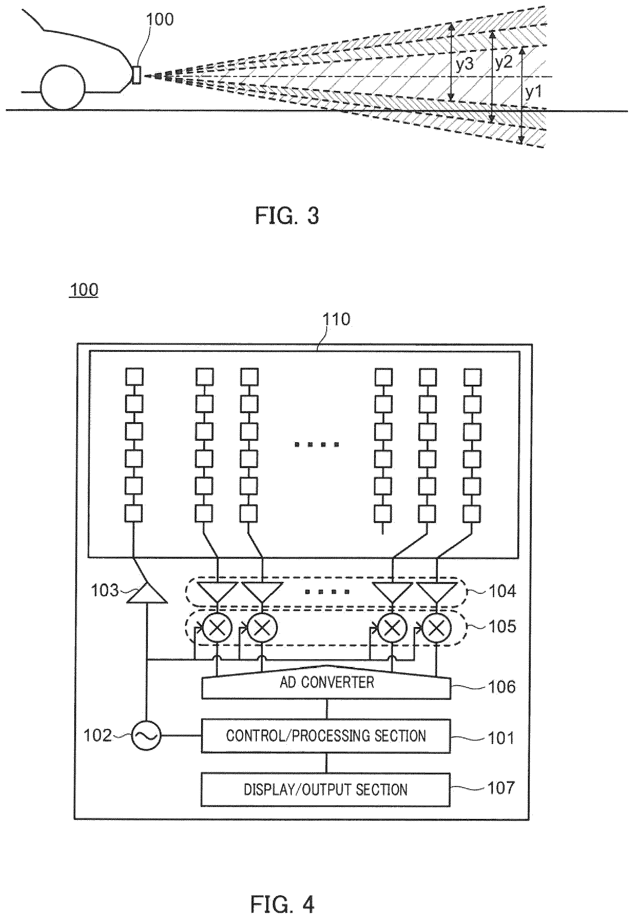

FIG. 3 is a diagram illustrating how radiation is made in the elevation direction by radar apparatus 100 according to the present embodiment. In the case of the present embodiment, a radar wave is radiated more upward as the frequency of the transmission signal that is supplied to the antenna increases. Specifically, when a signal at frequency f1 is supplied to the antenna, a radar wave in elevation range y1 in the drawing is radiated, and when a signal at frequency f2 (> f1) is supplied to the antenna, a radar wave in elevation range y2 in the drawing is radiated, and when a signal at frequency f3 (> f2) is supplied to the antenna, a radar wave in elevation range y3 in the drawing is radiated.

FIG. 4 is a diagram illustrating a schematic configuration of the radar apparatus according to the present embodiment. Radar apparatus 100 is mounted on a vehicle, for example. However, radar apparatus 100 may also be mounted on other location than a vehicle.

Radar apparatus 100 causes oscillator 102 to output a chirp signal by controlling oscillator 102 by control/processing section 101. The chirp signal is supplied to antenna 110 via amplifier 103. In the case of the present embodiment, antenna 110 is a patch antenna, and the chirp signal is supplied to a plurality of patches arranged in a vertical direction (height direction).

Radar apparatus 100 receives a reception signal by antenna 110. In the case of the present embodiment, the reception signal is received by a plurality of patches arranged in the vertical direction (height direction) and a lateral direction (horizontal direction). The reception signal obtained by antenna 110 is input to amplifiers 104 and mixers 105 corresponding to a plurality of channels. At mixer 105, demodulation is performed by multiplication of the reception signal and the chirp signal, and the demodulated reception signal is input to control/processing section 101 via AD converter 106.

Control/processing section 101 obtains three-dimensional information (that is, information in the horizontal direction and the height direction) by performing processes described below using the demodulated reception signal. The three-dimensional information obtained by control/processing section 101 is displayed and/or output by display/output section 107.

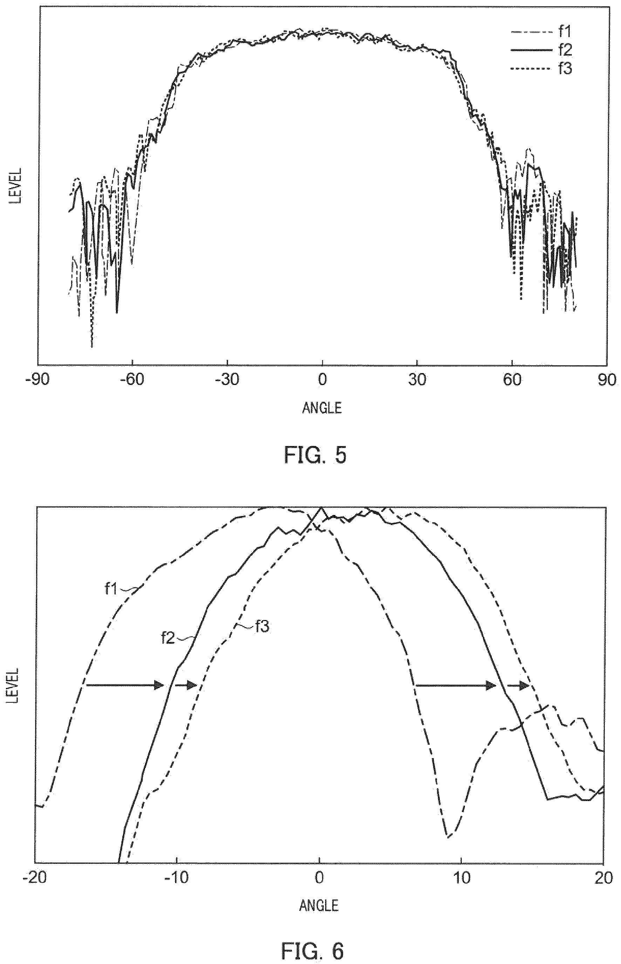

FIGS. 5 and 6 are diagrams illustrating frequency characteristics of antenna 110 used in the present embodiment. FIG. 5 illustrates the frequency characteristics of antenna 110 in the horizontal direction, and FIG. 6 illustrates the frequency characteristics of antenna 110 in the elevation direction (height direction). Additionally, a dash-dotted line in the drawing indicates characteristics for a case where a signal at frequency f1 is supplied to antenna 110, a solid line in the drawing indicates characteristics for a case where a signal at frequency f2 (> f1) is supplied to antenna 110, and a dotted line in the drawing indicates characteristics for a case where a signal at frequency f3 (> f2) is supplied to antenna 110.

As can be seen from FIG. 5, antenna 110 is an antenna, a radiation angle of which in the horizontal direction hardly changes even when the frequency of a supplied signal is changed. Furthermore, antenna 110 is an antenna, the radiation angle of which in the elevation direction (height direction) changes according to the frequency of the supplied signal. As described above, the present embodiment uses antenna 110 with respect to which horizontal radiation hardly changes and only elevation radiation changes when the supplied frequency is changed. In practice, antenna 110 having such frequency characteristics may be implemented by performing designing by appropriately selecting the size and gap of the patches. Moreover, the antenna having the frequency characteristics as described above may be implemented by an antenna other than the patch antenna.

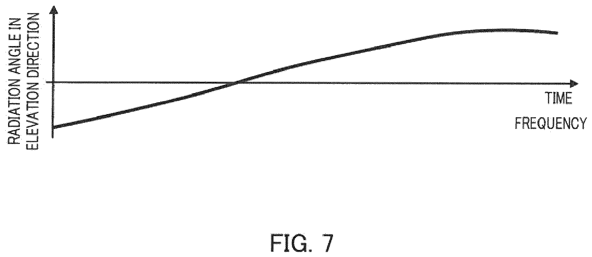

FIG. 7 is a diagram illustrating how the radiation angle of antenna 110 changes in the elevation direction, where the frequency of the signal that is supplied to antenna 110 is increased over time. Specifically, an example of a case where an up-chirp signal is supplied to antenna 110 is illustrated. It can be seen from FIG. 7 that the radiation angle in the elevation direction is changed upward as the frequency is increased in one chirp.

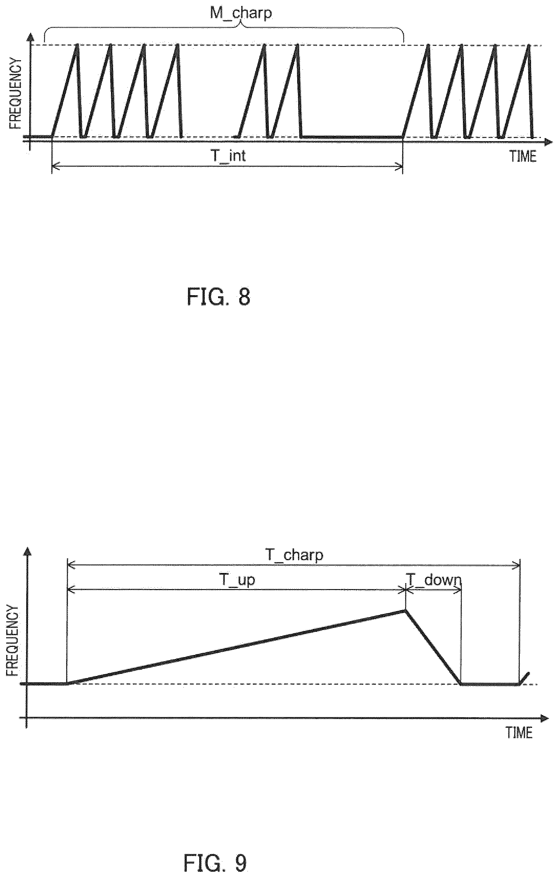

In the present embodiment, antenna 110 supplies a transmission signal as illustrated in FIG. 8 according to FM-CW method. Furthermore, measurement is performed taking M chirp signals as one measurement unit (one frame). FIG. 9 is a diagram illustrating frequency change of a single chirp signal (or in other words, a unit chirp signal), and the frequency of the chirp signal increases in period T up in single chirp signal period T_chirp, and decreases in period T_down.

When such a chirp signal is supplied to antenna 110 having the frequency characteristics as described above, the radiation angle in the elevation direction changes in one chirp as illustrated in FIG. 3. As a result, information in a plurality of elevation directions may be obtained in one chirp.

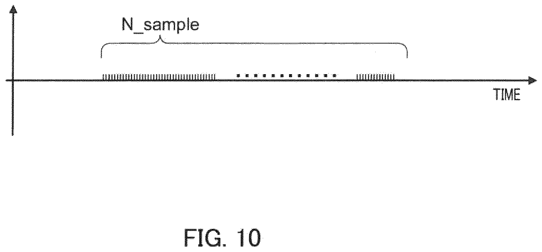

Next, processing on a reception signal performed by control/processing section 101 will be described. Control/processing section 101 performs sampling on a received single chirp signal into N pieces of sampling data as illustrated in FIG. 10, and performs processing taking the N pieces of sampling data as a processing unit. That is, when N sample is taken as the number of samples in one chirp, L as the number of receiving systems (the number of receiving channels), and M_chirp as the number of chirps in one frame, the number of pieces of data in one measurement is N_sample × L × M chirp. After acquisition of the same, radar apparatus 100 performs data processing on the reception signal described below.

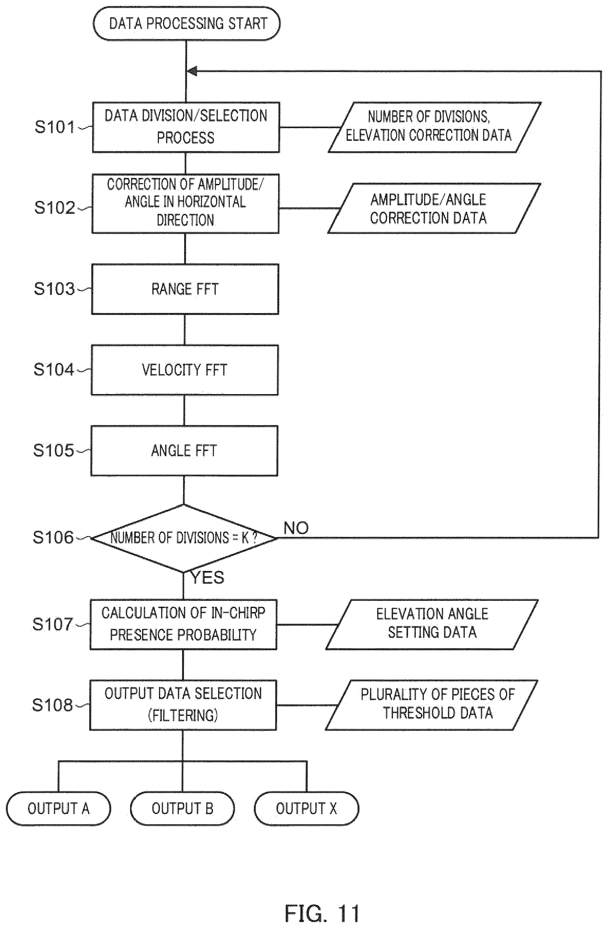

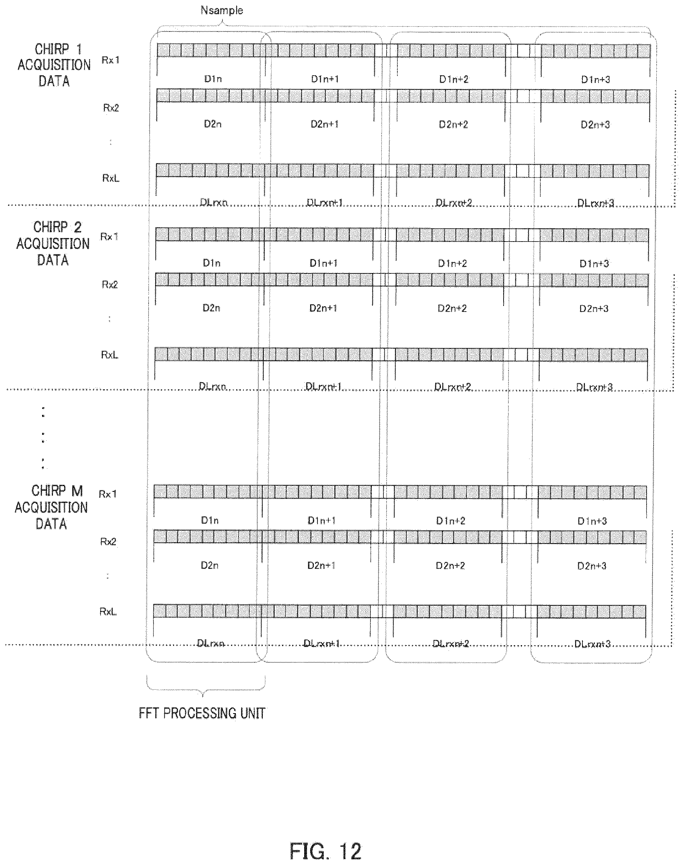

FIG. 11 is a flowchart illustrating data processing on a reception signal that is performed by control/processing section 101. FIG. 12 is a diagram for describing reception data that is used at the time of the data processing in FIG. 11. As illustrated in FIG. 12, reception data is input to control/processing section 101 in parallel from L (L channels) antennas Rx1 to RxL in the horizontal direction. Control/processing section 101 divides reception data of N sample into K pieces. In the example in FIG. 12, N sample is divided into four pieces. Then, an FFT process is performed taking divided data as an FFT unit.

As illustrated in FIG. 11, in step S101, control/processing section 101 performs division of data and a data selection process. At this time, control/processing section 101 divides data and selects data on the basis of the number of divisions and elevation correction data. That is, in the case where the number of divisions is four, N sample is divided into four pieces, and in the case where the number of divisions is K, N sample is divided into K pieces. Furthermore, because elevation change of antenna 110 when the frequency is increased/reduced is, in reality, not linear, and the elevation correction data is used to perform correction by such an amount. In reality, elevation change of antenna 110 tends to be small at a position where the frequency is close to maximum in one chirp, and thus, there is an interval between pieces of data used for the FFT process on that account, as illustrated in FIG. 12. For example, a selection interval timing of data used for the FFT process may be such that differences in average values of elevation are made approximately the same.

Next, in step S102, control/processing section 101 corrects amplitude and angle in the horizontal direction on the basis of correction data for the amplitude and the angle.

Next, control/processing section 101 performs, on data of one FFT processing unit obtained by division as illustrated in FIG. 12, range FFT processing in step S103, velocity FFT processing in step S104, and angle FFT processing in step S105, and thus calculates a distance, a velocity and an angle of a detected point in one elevation range. Methods of calculating the distance, the velocity and the angle by the range FFT processing, the velocity FFT processing and the angle FFT processing here are known techniques, and a description thereof is omitted.

Control/processing section 101 repeats the processes in steps S101 to S105 until a division number reaches K in step S106. That is, the processes in steps S101 to S105 are repeated K times. The distance, the velocity and the angle are thus calculated for detected points corresponding to the number of divisions (in the case of the present embodiment, the number of divisions, four, as illustrated in FIG. 12). In other words, the distance, the velocity and the angle are calculated for each single chirp signal, for the number of divisions.

In step S107, control/processing section 101 calculates an in-chirp presence probability. Here, data (detected point) after FFT includes a distance and an angle, and can be plotted on a two-dimensional plane that takes the distance and the angle as coordinate axes. Furthermore, because data in one chirp is divided into K pieces, K two-dimensional planes are obtained for one chirp. Control/processing section 101 calculates the in-chirp presence probability of the detected point using the K two-dimensional planes.

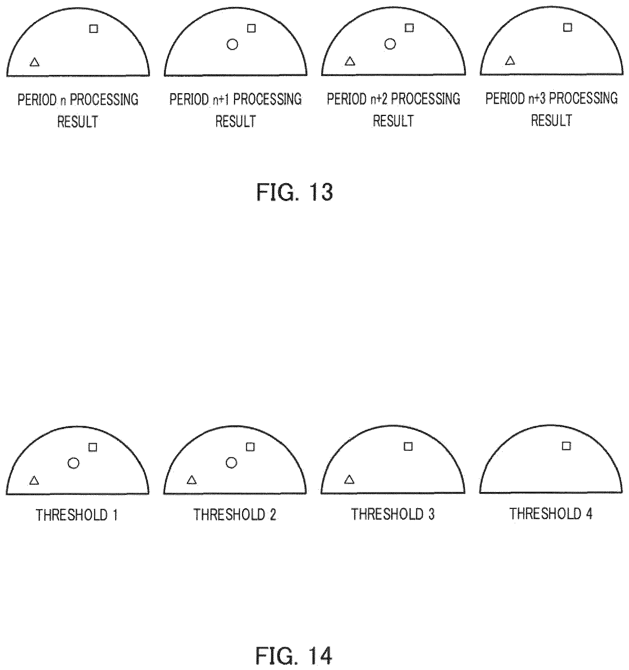

The process in step S107 will be described with reference to FIG. 13. FIG. 13 illustrates detected points on the two-dimensional planes obtained in divided blocks in periods n, n+1, n+2 and n+3. A detected point indicated by a square in the drawing is present on all the planes, and thus, the presence probability is 100%. A detected point indicated by a triangle has a presence probability of 75%, and a detected point indicated by a circle has a presence probability of 50%. In this manner, control/processing section 101 calculates the in-chirp presence probability of a detected point on the basis of the number of two-dimensional planes, among the K two-dimensional planes, on which the corresponding detected point is present. In other words, a presence probability of reflection in a chirp is calculated on the basis of whether there is reflection from a same position on the two-dimensional planes.

A high in-chirp presence probability means a high probability of being an object with a height in the height direction, or in other words, an object that is an obstacle to a vehicle or the like. The present embodiment uses a principle that reflection remains for an object with a height or a tall object even when the radiation angle in the elevation direction is slightly changed, but reflection is removed for an object with no height or a low object when the radiation angle in the elevation direction is even slightly changed.

In step S108, control/processing section 101 performs output data selection process (filtering process). Specifically, a plurality of pieces of threshold data to be used for threshold determination regarding the presence probability are input, and output data is obtained for each piece of threshold data. The process in step S108 is described with reference to FIG. 14. Here, threshold 1 is a threshold for determining that a detected point is present on one or more two-dimensional planes, threshold 2 is a threshold for determining that a detected point is present on two or more two-dimensional planes, threshold 3 is a threshold for determining that a detected point is present on three or more two-dimensional planes, and threshold 4 is a threshold for determining that a detected point is present on four or more two-dimensional planes. As outputs corresponding to threshold 1 and threshold 2, images in which all of a square, a triangle and a circle (detected points) are shown are output. As an output corresponding to threshold 3, an image in which a square and a triangle are shown is output. As an output corresponding to threshold 4, an image in which a square is shown is output. It can be said that, in the process in step S108, a filtering process related to the detected point is performed on the basis of the number of two-dimensional planes on which corresponding detected points are present.

As described above, according to the present embodiment, there are provided antenna 110 that has frequency characteristics leading to a change in the radiation angle in the elevation direction according to the frequency that is supplied, a transmission signal forming section (control/processing section 101, oscillator 102, amplifier 103) that supplies a chirp signal to antenna 110, and a reception processing section (control/processing section 101) that obtains a detected point in each frequency band by using a reception signal corresponding to a transmission signal in each frequency band included in the chirp signal, and that obtains information in the height direction on the basis of whether the detected point is present or not over the plurality of frequency bands, and radar apparatus 100 that is capable of acquiring three-dimensional information may thus be implemented, without increasing complexity and size of the apparatus configuration. That is, according to the configuration of the present embodiment, information in the vertical direction (height direction) may be obtained with a simple configuration without complex switching between antennas nor signal processing.

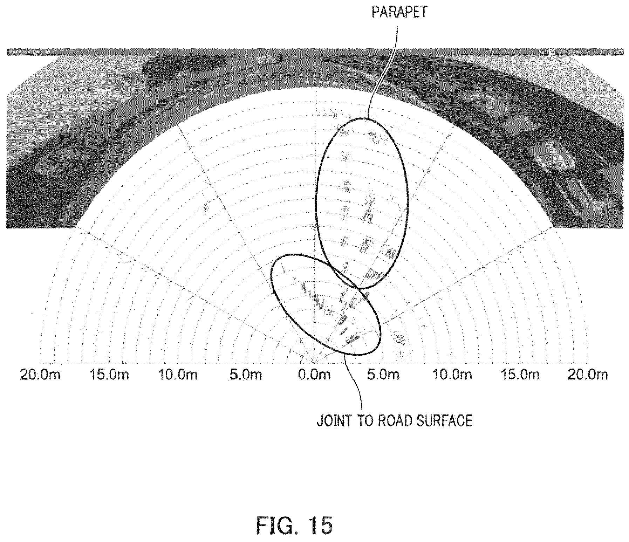

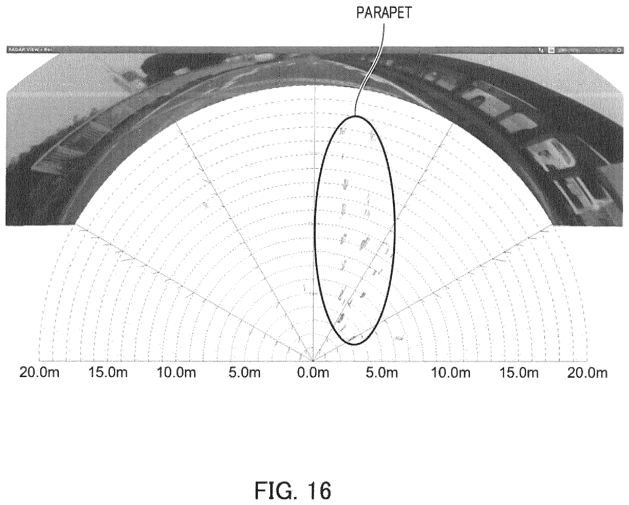

FIG. 15 is a diagram illustrating an example of data that is obtained by a conventional radar apparatus, and FIG. 16 is a diagram illustrating an example of data that is obtained by radar apparatus 100 according to the present embodiment. In the data in FIG. 15, a metal portion at a joint between a bridge on the ground and a road surface is observed together with a parapet of the bridge. As a result, there is a possibility that the joint is treated as an obstacle. On the other hand, in the data illustrated in FIG. 16 that is obtained by the present embodiment, data of the parapet of the bridge is maintained while the joint between the bridge and the road surface is removed. That is, it is possible to leave only an object with a height, and thus, detection of an obstacle may be accurately performed.

Furthermore, with radar apparatus 100 of the present embodiment, erroneous detection due to a ghost may be prevented. That is, when the radiation angle in the elevation direction is changed, a path is also changed, and the presence probability of a detected point that is erroneously detected due to a ghost is reduced, and a ghost is thereby prevented. Specifically, in the present embodiment, by changing the radiation angle in the elevation direction little by little, the angle of a radio wave hitting an object is changed little by little. A reflection point that is removed from view at such a time is highly likely a ghost and not a real reflection point (or in other words, a reflection point of an actual object), and such a reflection point is removed in the present embodiment.

Moreover, with radar apparatus 100 of the present embodiment, information in the vertical direction (height direction) may be obtained without increasing the number or area of antennas, and thus, three-dimensional information may be acquired using a small antenna that is advantageous for attachment to a vehicle or the like.

The embodiment described above is merely a specific example for carrying out the present invention, and the technical scope of the present invention is not to be interpreted limitedly on the basis of the embodiment. That is, the present invention may be embodied in various modes within the scope or the main characteristics of the present invention.

For example, in the embodiment described above, a case of using an up-chirp signal as the chirp signal is described as an example, but it is needless to say that a down-chirp signal or both the up-chirp signal and the down-chirp signal may be used.

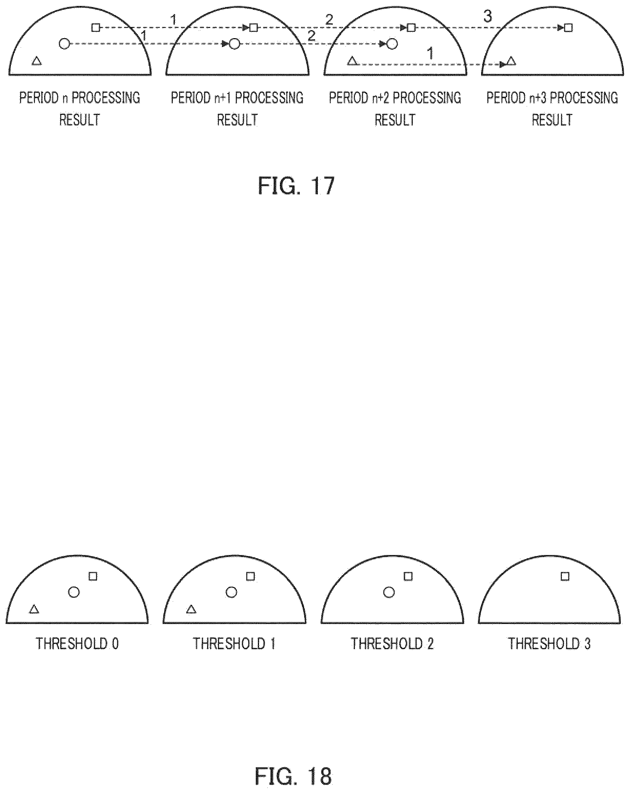

Moreover, as illustrated in FIGS. 13 and 14, in the embodiment described above, a case is described where a filtering process related to the detected point is performed on the basis of the number of two-dimensional planes on which corresponding detected points are present, but the filtering process related to the detected point may be performed, as illustrated in FIGS. 17 and 18, on the basis of the number of two-dimensional planes on which corresponding detected points are continuously present. That is, the detected point may be filtered on the basis of the degree of continuity of the detected point present over a plurality of frequency bands. This increases a tracking accuracy with respect to a corresponding detected point, and clutters and ghosts may be even more suppressed.

A specific description will be given. FIG. 17 illustrates detected points on two-dimensional planes obtained in divided blocks in periods n, n+1, n+2 and n+3. Successive detection of a square in the drawing is performed three times in a row, successive detection of a triangle is performed two times in a row, and successive detection of a circle is performed one time in a row. In FIG. 18, threshold 0 indicates zero or more times in a row, threshold 1 indicates one or more times in a row, threshold 2 indicates two or more times in a row, and threshold 3 indicates three or more times in a row. As outputs (filtering outputs) corresponding to threshold 0 and threshold 1, images in which all of a square, a triangle and a circle (detected points) are shown are output. As an output corresponding to threshold 2, an image in which a square and a circle are shown is output. As an output corresponding to threshold 3, an image in which a square is shown is output.

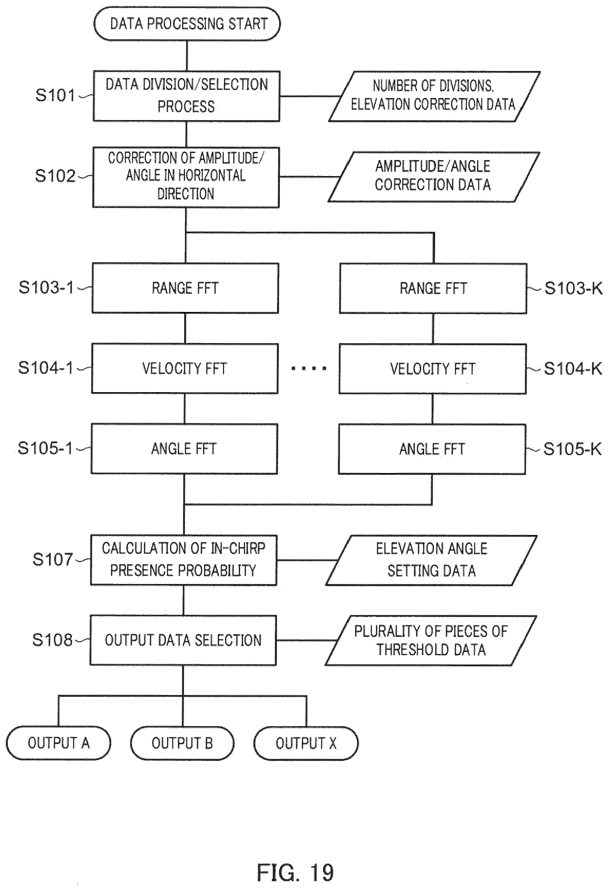

Furthermore, in the embodiment described above, a case is described where processing is serially repeated for K divided blocks, but as illustrated in FIG. 19, processing for K divided blocks may alternatively be performed in parallel. Here, steps SI03-1, S104-1 and S105-1 indicate processing for a first divided block, and steps S103-K, S104-K and S105-K indicate processing for a K-th divided block.

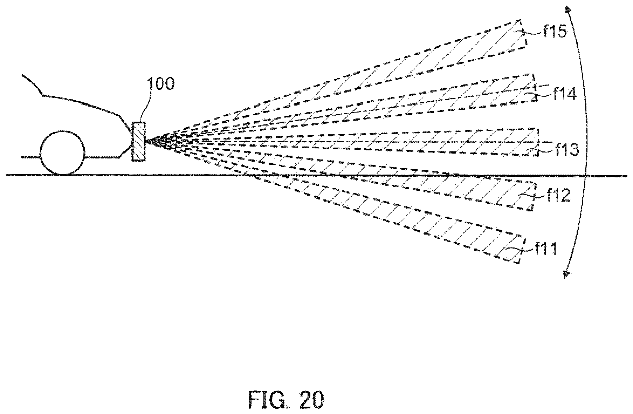

Furthermore, in the embodiment described above, a case is described where the radiation angle in the elevation direction is continuously changed in one chirp by supplying a transmission signal according to the FM-CW method to antenna 110 that has frequency characteristics leading to a change in the radiation angle in the elevation direction according to the supplied frequency, but as illustrated in FIG. 20, radar radiation may be performed in radiation ranges that are separate from one another in the elevation direction, by supplying, to antenna 110, transmission signals in a plurality of frequency bands that are separate from one another. Also in this case, three-dimensional information including information in the height direction may be obtained in the same manner as in the embodiment described above.

Moreover, in the embodiment described above, a case is described where the filtering process (suppression process) of the detected point is performed on the basis of the presence probability of the detected point when the radiation angle in the elevation direction is changed; but information about the height of an object may alternatively be obtained on the basis of presence/absence of the detected point when the radiation angle in the elevation direction is changed. In practice, as illustrated in FIG. 20, for example, information about the height of the detected point may be calculated by changing the radiation angle of antenna 110 in the elevation direction by supplying, to antenna 110, transmission signals divided into a plurality of frequency bands f11, f12, f13, f14 and f15, and on the basis of distance information of the detected point detected in each frequency band and radiation angle information in each frequency band according to elevation frequency characteristics of the antenna.

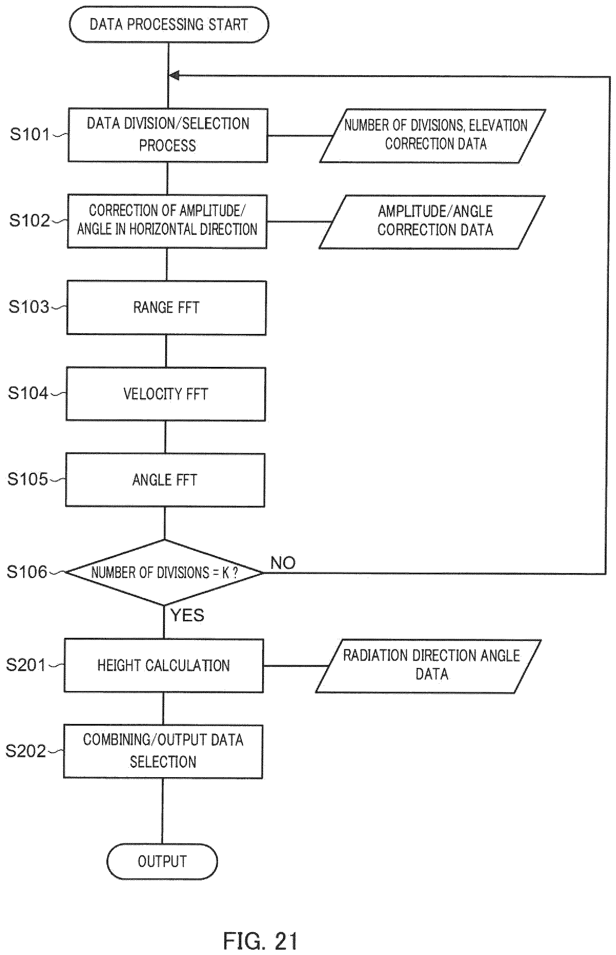

FIG. 21 is a flowchart illustrating data processing on a reception signal performed to obtain three-dimensional information including the height information, where parts corresponding to those in FIG. 11 are denoted by the same reference signs. In the data processing in FIG. 21, in step S201, control/processing section 101 calculates the height of a detected object. Specifically, the height information of a detected point may be obtained from the distance information of the detected point calculated in step S103 and radiation angle data of antenna 110 corresponding to the frequency band where the detected point is present. In the following step S202, control/processing section 101 generates three-dimensional information by combining the height information, the distance information, the velocity information and the angle information, and outputs the three-dimensional information. An apparatus (not illustrated) that receives such three-dimensional data may perform processes such as travel-over determination or travel-under determination using such three-dimensional data.

The disclosure of Japanese Patent Application No. 2017-191213, filed on September 29, 2017, including the specification, drawings and abstract, is incorporated herein by reference in its entirety.

### Industrial Applicability

The present invention is suitable for use in a vehicle-mounted radar apparatus, for example.

### Reference Signs List

- 1: Vehicle
- 2, 100: Radar apparatus
- 101: Control/processing section
- 102: Oscillator
- 103, 104: Amplifier
- 105: Mixer
- 106: AD converter
- 107: Display/output section
- 110: Antenna

## Claims

1. A radar apparatus, comprising:
an antenna that has frequency characteristics leading to a change in a radiation angle in an elevation direction according to a frequency that is supplied;
a transmission signal forming section that supplies, to the antenna, transmission signals in a plurality of frequency bands; and
a reception processing section that obtains a detected point in each frequency band by using a reception signal corresponding to a transmission signal in each frequency band, and that obtains information in a height direction on a basis of whether the detected point is present or not over the plurality of frequency bands.

2. The radar apparatus according to claim 1, wherein the transmission signal forming section forms a chirp signal that includes the plurality of frequency bands in a single chirp signal, and supplies the chirp signal to the antenna.

3. The radar apparatus according to claim 1, wherein the reception processing section filters the detected point on a basis of a presence probability of the detected point over the plurality of frequency bands.

4. The radar apparatus according to claim 1, wherein the reception processing section filters the detected point on a basis of a degree of continuity of the detected point present over the plurality of frequency bands.

5. The radar apparatus according to claim 1, wherein the reception processing section obtains height information of the detected point from distance information of the detected point and radiation angle information of the antenna corresponding to a frequency band where the detected point is present.
